# EUROPEAN PATENT SPECIFICATION

(11) **EP 3 357 623 B1**
(45) Date of publication and mention of the grant of the patent: **15.07.2026**
(21) Application number: 18152459.6
(22) Date of filing: 19.01.2018
(51) Int. Cl.: B23K 9/10, H02J 7/02

(54) **METHODS AND APPARATUS FOR A MULTI-MODE WELDING-TYPE POWER SUPPLY**
VERFAHREN UND VORRICHTUNG FÜR MULTIMODALE SCHWEISSSTROMVERSORGUNG
PROCÉDÉS ET APPAREIL POUR ALIMENTATION DE TYPE SOUDAGE MULTIMODE

(30) Priority: 02.02.2017 US 201715423192
(43) Date of publication of application: 08.08.2018
(73) Proprietor: Illinois Tool Works, Inc., Glenview, Illinois 60025 (US)
(72) Inventor: IHDE, Jeffery R., Glenview, Illinois, 60025 (US)
(74) Representative: Meissner Bolte Partnerschaft mbB

(56) References cited:
- US-A1- 2014 299 589
- US-B2- 8 969 762

## Description

### BACKGROUND

Conventional welding-type power supplies provide limited outputs. Some cases, welding-type power supplies have been used to provide power to a variety of tools, such as welding-type torches, plasma cutters, etc. The increase of the use of battery powered devices makes the ability to charge such devices in a work environment convenient and efficient. However, conventional welding-type power supplies are limited in providing welding-type power (e.g., at a level that would damage a rechargeable battery). A welding-type power supply, comprising a welding-type power source connected to a multi-mode power output circuit is known from US 2014/299589 A1, which forms the basis for the preamble of claim 1.

### SUMMARY

Apparatus and methods are disclosed of a welding-type power source to operate in one of the welding mode or a battery charging mode, substantially as illustrated by and described in connection with at least one of the figures, as set forth more completely in the claims.

### BRIEF DESCRIPTION OF THE DRAWINGS

FIG. 1 is a block diagram of an example welding-type power supply in accordance with aspects of this disclosure.
FIG. 2 is a block diagram of another example welding-type power supply in accordance with aspects of this disclosure.
FIG. 3 is a block diagram of yet another example welding-type power supply in accordance with aspects of this disclosure.
FIG. 4 illustrates an example method of operating a welding-type power supply in accordance with aspects of this disclosure.

The figures are not necessarily to scale. Where appropriate, similar or identical reference numbers are used to refer to similar or identical components.

### DETAILED DESCRIPTION

The invention is defined in claim 1.

Disclosed are examples of multi-mode welding-type power supplies configured to operate in a welding mode, a battery charging mode, or in both a welding mode and a battery charging mode, and example methods of implementing the multi-mode welding-type power supplies. The multi-mode welding-type power supply is configured to detect a load at one or more outputs, determine the mode and/or type of load at the output, and operate in one of a welding mode or a battery mode based on the determined mode and/or type of load.

In examples, a single output can accommodate multiple devices, for instance a welding-type torch or a rechargeable battery. A multi-mode power output circuit can connect the device to a controller configured to detect the mode of operation (e.g., power requirements of the device) at the output. This can be accomplished by transmitting a test signal to the device, and receiving a feedback signal indicative of a mode of operation and/or type of the device, both of which represent power requirements of the device. Based on the determination, the multi-mode welding-type power supply can operate in one or more modes to provide an appropriate level of power for the device.

Therefore, the power supply can provide welding-type power to a determined welding-type torch (e.g., MIG, TIG, GMAW, FCAW, plasma cutter, etc.) in a welding mode, and provide battery level power a battery charging mode.

Additionally or alternatively, the controller can periodically transmit a test signal to continually monitor a load at the output (e.g., to determine when a rechargeable battery is fully charged).

In some examples, two or more outputs can accommodate multiple devices simultaneously. In a similar manner, a controller can transmit a test signal to each output and determine whether a device is connected, what mode each device is operating in, what is the type of each device, and what the power requirements are for each device. Accordingly, the controller can condition the power at each output based on the determination. For instance, one output can recharge a battery, while a second output can provide welding-type power to a welding-type torch, and so on, based on the determined mode at each output.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit" includes any analog and/or digital components, power and/or control elements, such as a microprocessor, digital signal processor (DSP), software, and the like, discrete and/or integrated components, or portions and/or combinations thereof.

Disclosed example welding-type power supplies include a welding-type power source connected to a multi-mode power output circuit, a controller to receive an input from the welding-type power source and output a control signal to the multi-mode power output circuit. The controller is configured to identify whether a load at the multi-mode power output corresponds to a welding mode or a battery charging mode. The controller is also configured to control the multi-mode power output circuit to condition the power from the welding-type power source based on the identified one of the welding mode or the battery charging mode.

In some examples, the controller is configured to control the multi-mode power output circuit based on a first current-voltage curve in the welding mode and control the multi-mode power output circuit based on a second current-voltage curve in the battery charging mode, the first current-voltage curve being different than the second current-voltage curve.

In disclosed examples, the controller is configured to transmit a test signal to the load in the battery charging mode, monitor a feedback signal in response to the test signal; and determine a sub-mode based on a parameter of the feedback signal. In some examples, the controller is configured to control the multi-mode power output circuit in the battery charging mode based on the determined sub-mode, the sub-mode including one of a normal charging mode, a trickle charging mode, a fast charging mode, or a high-current mode. In some examples, the feedback signal includes a battery parameter comprising one of temperature, resistance, current and voltage. In some examples, the controller is further configured to provide battery power to the load based on the determined sub-mode, periodically transmit the test signal to the load in the determined sub-mode, monitor the feedback signal in response to the test signal, and determine a change in the sub-mode based on a parameter of the feedback signal.

In some examples, the multi-mode power output circuit comprises a switching regulator to convert a power output from the welding-type power source to a welding-type power. In some examples, at least one switch is connected to the controller to select one of the mode and a level of power output of the welding-type power supply. In some examples, a user interface provides a list of options for operation of the power supply, the list including a mode and a level of power output of the welding-type power supply. In some examples, the welding-type power source is at least one of mains power, an engine-driven electric generator, or an energy storage device. In some examples, a bus is connected to the welding-type power source, the energy storage device, and the multi-mode power output circuit. In some examples, the welding-type power source provides welding-type power to a welding-type torch.

According to the invention, a welding-type power supply includes a welding-type power source connected to a first multi-mode power output circuit and to a second multi-mode power output circuit. A controller has an input in electrical communication with the welding-type power source and each of the first and second multi-mode power output circuits. The controller is configured to transmit a test signal to each multi-mode power output and determine whether a load is connected; to identify whether a first load at the first multi-mode power output circuit corresponds to a welding mode or a battery mode based on the test signal, identify whether a second load at the second multi-mode power output circuit corresponds to the welding mode or the battery mode based on the test signal; and control the first and second multi-mode power output circuits to condition the power from the welding-type power source based on respective current-voltage curves in the identified one of the welding mode or the battery mode.

In some examples, the first load corresponds to the welding mode and the second load corresponds to the battery charging mode. In some examples, the controller is further configured to control the first multi-mode power output circuit based on a first current-voltage curve, and control the second multi-mode power output circuit based on a second current-voltage curve. In some examples, the controller further configured to control both of the first and second multi-mode power output circuits based on a first current-voltage curve in the welding mode. In some examples, the controller further configured to control both of the first and second multi-mode power output circuits based on a second current-voltage curve in a battery charge mode.

In some examples, a third multi-mode power output circuit connected the welding-type power source and connected to the controller. The controller is configured to identify whether a third load at the first multi-mode power output circuit corresponds to a welding mode or a battery mode, and control the third multi-mode power output circuit to condition the power from the welding-type power source based on the identified one of the welding mode or the battery mode.

In other examples, a method of operating a welding-type power supply is disclosed. The method includes identifying whether a load at a multi-mode power output circuit corresponds to a welding mode or a battery mode, and conditioning power from a welding-type power source based on the identified one of the welding mode or the battery charging mode.

In some examples, the controller controls the multi-mode power output circuit based on a first current-voltage curve in the welding mode, and controls the multi-mode power output circuit based on a second current-voltage curve in the battery charging mode, with the first current-voltage curve being different than the second current-voltage curve.

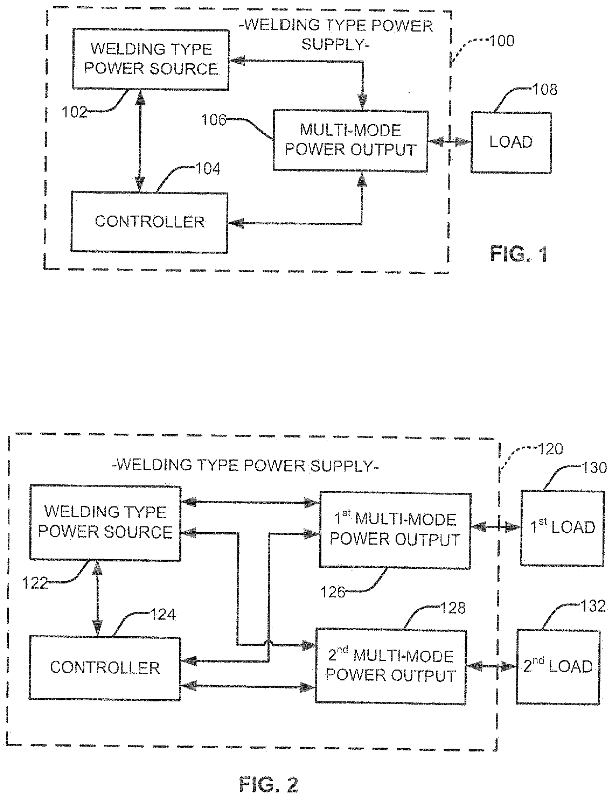

FIG. 1 is a block diagram of a multi-mode welding-type power supply 100. The example power supply 100 includes a welding-type power source 102, a controller 104 and a multi-mode power output 106. In an example, the controller 104 of FIG. 1 can be configured as a processor or microcontroller, such as a programmable logic circuit, a system-on-chip, a programmable logic device, and/or any other type of logic circuit. The multi-mode power output 106 may be implemented as a circuit using power semiconductors, electromechanical devices, and/or any other type(s) and/or combinations of switching device. For instance, the multi-mode power output 106 can transfer power and/or information between a load 108 and the controller 104 and/or the power source 102.

In the example of FIG. 1, each of the power supply 100, the power source 102, the controller 104 and the multi-mode power output 106 are connected, such as by an electrical bus and/or one or more cables, for example. The multi-mode power output 106 provides a port or terminal for the power supply 100 to provide power to the load 108. In an example, the multi-mode power output 106 is configured for a particular type of connection (e.g., a welding-type torch cable), while in other examples the multi-mode power output 106 can be modified to accept multiple types of connectors. In this example, the multi-mode power output 106 may be configured with multiple connection outputs, and/or one or more adapters to accommodate various loads 108 (e.g., a welding-type torch, a rechargeable battery, 120 volt power cord, etc.).

The controller 104 communicates with the multi-mode power output 106 to, for example, transmit a test signal to the load 108 and receive a feedback signal that indicates one or more parameters associated with the load 108, for example, a mode, a type and/or power requirements of the load 108. The controller 104 communicates with the welding-type power supply 102 to control the type and amount of power provided to the multi-mode power output 106, and/or receive data from the welding-type power supply 102.

Having determined a mode of the load 108, the controller 104 controls the power source 102 to operate in one or more modes to provide an appropriate level of power for the device (e.g., a welding-type mode or a battery charge mode). Thus, the controller 104 can control the welding-type power source 102 to selectively condition and output power to the multi-mode power output circuit 106 for the load 108 based on the determined mode.

The controller 104 selectively controls the multi-mode power output 106 to output welding-type power, for instance, based on a determination that the load 108 is a welding-type torch. In another example, the controller 104 enables charging of a connected rechargeable battery by controlling the welding-type power source 102 to condition and output suitable power for the battery, based on the determination that the device (e.g., load 108) operates in a battery charging mode.

Additional and/or alternative parameters may provide information of the load 108. For example, the feedback signal can provide data that the load 108 is a particular welding-type torch. The feedback signal can also indicate that the load 108 is an identifiable type of rechargeable battery, designed and/or authorized for use with the power supply 100. Identified parameters of a particular battery may include a model number of the battery (e.g., a predefined type or model), a charge state of the load 108, a nominal voltage of the load 108 (e.g., an output voltage when the energy storage device is charged to capacity), and/or any other parameter that can be recognized in the feedback signal, for example. The controller 104 controls the multi-mode power output 106 based on the identified parameter(s).

By communicating with the multi-mode power output 106 and the load 108, the controller 104 controls the welding-type power source 102 based on one or more current-voltage curves in accordance with the determined mode. In an example, a first current-voltage curve representing a welding mode is provided by the welding-type power source 102 in response to a determination that the load 108 is a welding-type torch. Further, a second current-voltage curve representing a battery mode is provided in response to a determination that the load 108 is a battery in need of a charge.

Providing power to a load 108 according to the determined mode may be driven automatically by the controller 104 (e.g., in response to a feedback signal). In an example, the presence or absence of a load 108, and/or a change in the load 108 at the output 106, generates an automatic response by the controller 104 to condition the power from the welding-type power supply 102 for a different or modified load 108. In some examples, an interface (e.g., a switch, a computer input device, etc.) provides section options for an operator of the power supply. For example, the list can a mode and a level of power output, which can be selected manually or by other means.

For example, the controller 104 can further determine a sub-mode based on the received a parameter of the feedback signal. In some examples, while operating in the battery charging mode, a parameter of the feedback signal (e.g., temperature, resistance, current, voltage etc.) can indicate to the controller 104 that providing power in accordance with a sub-mode is appropriate (e.g., a normal charging mode, a trickle charging mode, a fast charging mode, a high-current mode, etc.).

In some examples, the controller 104 periodically and/or continually transmits a test signal and/or monitors for one or more conditions (e.g., a externally sourced voltage present at the load 108) to determine a change in the mode and/or sub-mode based on a parameter of the feedback signal. If a change in mode/sub-mode is detected by the controller 104, the controller 104 can control the power source 102 to modify the power output, such as with additional current-voltage curves that represent one or more of the sub-modes.

By monitoring the feedback signal, the controller 104 can detect an end of a charging operation. In response to detecting the end of the charging operation (i.e., the feedback signal indicates the battery is fully charged), the controller 104 can command the welding power source 104 to end provision of power to the output 106 and/or modify a sub-mode (e.g., change from a normal battery charging sub-mode to a trickle charging sub-mode). In this manner, the power supply 100 can automatically adjust to a change in the power needs of the load 108 (e.g., as the battery becomes fully charged).

FIG. 2 is a block diagram of another example welding-type power supply 120. The example power supply 120 of FIG. 2 is similar to the power supply 100 of FIG. 1, with the exception that first and second multi-mode power outputs 126, 128 are used to provide power to first and second loads 130, 132. In this example, the controller 124 can operate generally in a manner consistent with the welding-type power supply 100 of FIG. 1, as described herein. Additionally and/or alternatively, the controller 124 can operate such that the welding-type power source 122 provides power to each multi-mode power outputs 126, 128, or selectively provides power to only one of the multi-mode power outputs 126, 128.

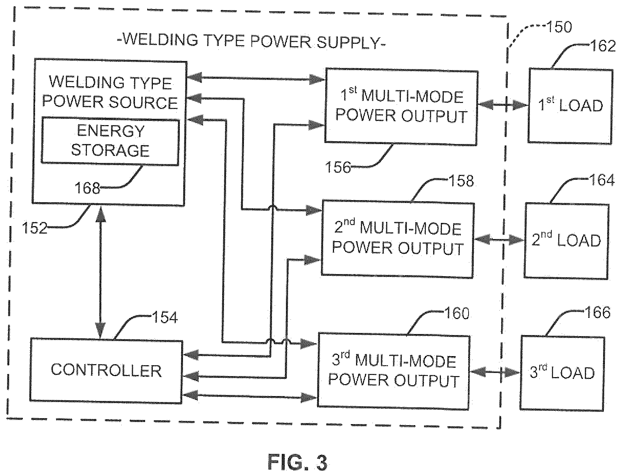

In an example, the controller 124 determines if the loads 130, 132 are operating in the same mode (e.g., both loads 130, 132 are welding-type torches) or in different modes (e.g., load 130 is a welding-type torch, load 132 is a rechargeable battery, or one of the loads 130, 132 is not connected to a device). As generally described with respect to FIG. 1, the controller 124 transmits a test signal to both loads 130, 132. Based on the feedback signal from each load 130, 132, the controller 124 determines a mode of each load 130, 132 and conditions power from the welding-type power source 122 to provide power to each multi-mode power outputs 126, 128, or selectively provides power to a subset of multi-mode power outputs 126, 128. Although FIG. 2 illustrates two outputs 126, 128, three or more multi-mode power outputs may be similarly used (see, e.g., FIG. 3).

In the example illustrated in FIG. 3, a welding-type power supply 150 includes a welding-type power source 152, a controller 154, and first, second and third multi-mode power outputs 156, 158, 160. Each multi-mode power outputs 156, 158, 160 corresponds to a first, second and third load 162, 164, 166, respectively. In this example, the controller 154 can operate generally in a manner consistent with the welding-type power supplies 100 and 120 of FIGS. 1 and 2, respectively, as described herein. Additionally and/or alternatively, the controller 154 can control the power source 152 to provide power to each multi-mode power outputs 156, 158, 160, or selectively provide power to a subset of multi-mode power outputs 156, 158, 160 (e.g., load 162 is a welding-type torch, load 164 is a rechargeable battery, and/or load 166 is not connected to a device).

In some examples, such as shown in FIG. 3, the power source 152 can include an energy storage device 168 (e.g., a rechargeable battery, a capacitor, etc.). The energy storage device 168 can be integrated within the power source 152, can be remotely located and connected by a power cable or other means, and/or can be removable from the power source 152. The power source 152 may be connected and/or disconnected to energy storage device 168 to enable an energy-depleted energy storage device 168 to be swapped with a charged energy storage device.

The energy storage device 168 can be a rechargeable battery, with the power source 152 configured to provide power to recharge the energy storage device 168. For instance, the controller 154 can include a charger control output in electrical communication with a charger control input to control charging of the energy storage device 168. Recharging can occur automatically, based on transmission of a test signal and receipt of a feedback signal indicating the energy storage device 168 is in need of a charge. Further, the controller 104 may command ,the welding power source 102 to charge energy storage device 168, even when welding is not occurring. Additionally and/or alternatively, a switch can be provided for a user to initiate recharging of the energy storage device 168.

The energy storage device 168 can be used to provide an alternate source of power, for instance, when the power source 152 is not connected to or being supplied with mains power, engine generated power, etc. The energy storage device 168 can also be used to supplement power provided by the power source 152. In some examples, the controller 154 can control the power source 152 to provide power to the first load 162 and/or the second load 164, while the energy storage device 168 provides power to the third load 166. Consistent with the disclosed examples, each of the loads 162, 164, 166 can provide the same amount of power (e.g., each operating in a welding mode or a battery recharging mode), or different amounts of power. In this example, the first load 162 can be operating in a welding mode, the second load 164 can be operating in a battery recharging mode, and the third load 166 can be providing no power (e.g., wherein the third load 166 is a fully charged battery, or a disconnected welding-type tool).

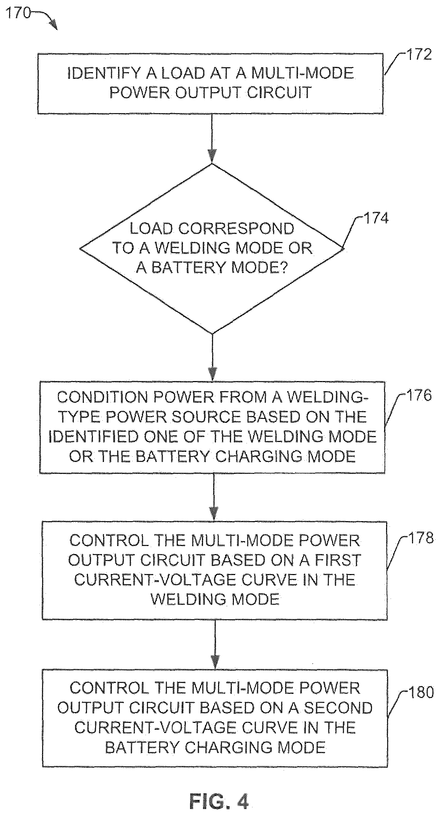

FIG. 4 is a flowchart illustrating example method 170 of operating a multi-mode power supply, for example the multi-mode power supplies 100, 120 and 150 of FIGS. 1-3. The method 170 of FIG. 4 may be implemented by any of the controller s 102, 122, 152 of FIGS. 1-3 by executing machine readable instructions stored on a non-transitory machine readable storage device. At block 172, the controller (e.g., controller 102, 122, 152) identifies whether a load (e.g., load 108, 130, 132, 162, 164, 166) is connected to a multi-mode power output circuit (e.g., multi-mode power output 106, 126, 128, 156, 158, 160). At block 174, the controller identifies whether the load corresponds to a welding mode or a battery mode. At block 176, the controller conditions power from a welding-type power source (e.g., welding-type power source 102, 122, 152) based on the identified one of the welding mode or the battery charging mode. At block 178, the controller controls the multi-mode power output circuit based on a first current-voltage curve in the welding mode. At block 180, the controller controls the multi-mode power output circuit based on a second current-voltage curve in the battery charging mode.

The present methods and systems may be realized in hardware, software, and/or a combination of hardware and software. Example implementations include an application specific integrated circuit and/or a programmable control circuit.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made within the scope of the appended claims.

## Claims

1. A welding-type power supply (100), comprising:
- a welding-type power source (102) connected to a multi-mode power output circuit (106); **characterized in that** the welding-type power supply (100) further comprises:
- a controller (104) to receive an input from the welding-type power source (102) and output a control signal to the multi-mode power output circuit (106), the controller (104) configured to:
- identify whether a load at the multi-mode power output corresponds to a welding mode or a battery charging mode; and
- control the multi-mode power output circuit (106) to condition the power from the welding-type power source (102) based on the identified one of the welding mode or the battery charging mode,
wherein the welding-type power supply (100) further comprises
- the welding-type power source (102) connected to a first multi-mode power output circuit (126) and to a second multi-mode power output circuit (128); and
- the controller (104) having an input in electrical communication with the welding-type power source (102) and each of the first and second multi-mode power output circuits (126, 128), the controller (104) configured to:
- transmit a test signal to each multi-mode power output and determine whether a load is connected;
- identify whether a first load (130) at the first multi-mode power output circuit (126) corresponds to a welding mode or a battery mode based on the test signal;
- identify whether a second load (132) at the second multi-mode power output circuit (128) corresponds to the welding mode or the battery mode based on the test signal; and
- control the first and second multi-mode power output circuits (126, 128) to condition the power from the welding-type power source (102) based on respective current-voltage curves in the identified one of the welding mode or the battery mode,
wherein the first load (130) corresponds to the welding mode and the second load (132) corresponds to the battery charging mode.

2. The welding-type power supply (100) as defined in claim 1
wherein the controller (104) is further configured when
transmitting a test signal to the load (130, 132) in the battery charging mode to:
- monitor a feedback signal in response to the test signal; and
- determine a sub-mode based on a parameter of the feedback signal,
wherein the feedback signal includes a battery parameter comprising one of temperature, resistance, current and voltage.

3. The welding-type power supply (100) as defined in claim 2,
the controller (104) further configured to control the multi-mode power output circuit (126, 128) in the battery charging mode based on the determined sub-mode, the sub-mode including one of a normal charging mode, a trickle charging mode, a fast charging mode, or a high-current mode.

4. The welding-type power supply (100) as defined in claim 2 or 3, wherein the controller (104) is further configured to:
- provide battery power to the load (130, 132) based on the determined sub-mode;
- periodically transmit the test signal to the load in the determined sub-mode;
- monitor the feedback signal in response to the test signal; and
- determine a change in the sub-mode based on a parameter of the feedback signal.

5. The welding-type power supply (100) as defined in one of the preceding claims,
wherein the multi-mode power output circuit (126, 128) comprises a switching regulator to convert a power output from the welding-type power source (102) to a welding-type power.

6. The welding-type power supply (100) as defined in one of the preceding claims,
comprising at least one switch connected to the controller (104) to select one of the mode and a level of power output of the welding-type power supply (100).

7. The welding-type power supply (100) as defined in one of the preceding claims,
comprising a user interface providing a list of options for operation of the power supply (100), the list including a mode and a level of power output of the welding-type power supply (100).

8. The welding-type power supply (100) as defined one of the preceding claims,
wherein the welding-type power source (102) is at least one of mains power, an engine-driven electric generator, or an energy storage device, further comprising a bus connected to the welding-type power source (102), the energy storage device, and the multi-mode power output circuit (126, 128).

9. The welding-type power supply (100) as defined in one of the preceding claims,
wherein the welding-type power source (102) can provide welding-type power to a welding-type torch.

10. The welding-type power supply (100) as defined in claim 1,
the controller (104) further configured to:
- control the first multi-mode power output circuit (126) based on a first current-voltage curve; and
- control the second multi-mode power output circuit (128) based on a second current-voltage curve; or
the controller (104) is further configured to control both of the first and second multi-mode power output circuits (126, 128) based on a first current-voltage curve in the welding mode; or
the controller (104) is further configured to control both of the first and second multi-mode power output circuits (126, 128) based on a second current-voltage curve in a battery charge mode.

11. The welding-type power supply (100) as defined in claim 1 or 10, further comprising a third multi-mode power output circuit (160) connected the welding-type power source (102) and connected to the controller (104), the controller (104) configured to:
- identify whether a third load (166) at the first multi-mode power output circuit (156) corresponds to a welding mode or a battery mode; and
- control the third multi-mode power output circuit (160) to condition the power from the welding-type power source (102) based on the identified one of the welding mode or the battery mode.

12. A method of operating a welding-type power supply (100) as defined in one of claims 1 to 11, comprising:
- transmitting a test signal to each multi-mode power output and determine whether a load is connected;
- identifying whether a load (130, 162, 132, 164, 166) at a multi-mode power output circuit (126, 156, 128, 158, 160) corresponds to a welding mode or a battery mode; and
- conditioning power from a welding-type power source (102) based on respective current-voltage-curves in the identified one of the welding mode or the battery charging mode.

13. The method of operating a welding-type power supply (100) as defined in claim 12, further comprising:
- controlling the multi-mode power output circuit (126, 156, 128, 158, 160) based on a first current-voltage curve in the welding mode; and
- controlling the multi-mode power output circuit (126, 156, 128, 158, 160) based on a second current-voltage curve in the battery charging mode, the first current-voltage curve being different than the second current-voltage curve.

## Patentansprüche

1. Schweißstromversorgung (100), aufweisend:
- eine Schweißstromquelle (102), die mit einer Multimodus-Leistungsausgabeschaltung (106) verbunden ist; **dadurch gekennzeichnet, dass** die Schweißstromversorgung (100) ferner aufweist:
- eine Steuerung (104) zum Empfangen einer Eingabe von der Schweißstromquelle (102) und Ausgeben eines Steuersignals an die Multimodus-Leistungsausgabeschaltung (106), wobei die Steuerung (104) eingerichtet ist zum:
- Identifizieren, ob eine Last an der Multimodus-Leistungsausgabe einem Schweißmodus oder einem Batterielademodus entspricht; und
- Steuern der Multimodus-Leistungsausgabeschaltung (106), um die Leistung von der Schweißstromquelle (102) basierend auf dem identifizierten von dem Schweißmodus oder dem Batterielademodus zu konditionieren, wobei
die Schweißstromversorgung (100) ferner aufweist
- die Schweißstromquelle (102), die mit einer ersten Multimodus-Leistungsausgabeschaltung (126) und einer zweiten Multimodus-Leistungsausgabeschaltung (128) verbunden ist; und
- wobei die Steuerung (104) einen Eingang aufweist, der in elektrischer Kommunikation mit der Schweißstromquelle (102) und jeder der ersten und zweiten Multimodus-Stromausgabeschaltung (126, 128) steht, wobei die Steuerung (104) eingerichtet ist zum:
- Übertragen eines Testsignals an jede Multimodus-Leistungsausgabe und Bestimmen, ob eine Last angeschlossen ist;
- Identifizieren, ob eine erste Last (130) an der ersten Multimodus-Leistungsausgabeschaltung (126) einem Schweißmodus oder einem Batteriemodus entspricht, basierend auf dem Testsignal;
- Identifizieren, ob eine zweite Last (132) an der zweiten Multimodus-Leistungsausgabeschaltung (128) dem Schweißmodus oder dem Batteriemodus entspricht, basierend auf dem Testsignal; und
- Steuern der ersten und zweiten Multimodus-Leistungsausgabeschaltung (126, 128) zum Konditionieren der Leistung von der Schweißstromquelle (102) basierend auf jeweiligen Strom-Spannungs-Kennlinien in dem identifizierten von dem Schweißmodus oder dem Batteriemodus,
wobei die erste Last (130) dem Schweißmodus entspricht und die zweite Last (132) dem Batterielademodus entspricht.

2. Schweißstromversorgung (100) nach Anspruch 1,
wobei die Steuerung (104), wenn ein Testsignal an die Last (130, 132) in dem Batterielademodus übertragen wird, ferner konfiguriert ist zum:
- Überwachen eines Rückkopplungssignals in Reaktion auf das Testsignal; und
- Bestimmen eines Untermodus basierend auf einem Parameter des Rückkopplungssignals,
wobei das Rückkopplungssignal einen Batterieparameter beinhaltet, aufweisend eines von Temperatur, Widerstand, Strom und Spannung.

3. Schweißstromversorgung (100) nach Anspruch 2,
wobei die Steuerung (104) ferner eingerichtet ist, die Multimodus-Leistungsausgabeschaltung (126, 128) in dem Batterielademodus basierend auf dem bestimmten Untermodus zu steuern, wobei der Untermodus eines umfasst von einem normalen Lademodus, einem Erhaltungslademodus, einem Schnelllademodus oder einem Hochstrommodus.

4. Schweißstromversorgung (100) nach Anspruch 2 oder 3, wobei die Steuerung (104) ferner eingerichtet ist zum:
- Bereitstellen von Batterieleistung an die Last (130, 132) basierend auf dem bestimmten Untermodus;
- periodischen Übertragen des Testsignals an die Last in dem bestimmten Untermodus;
- Überwachen des Rückkopplungssignals in Reaktion auf das Testsignal; und
- Bestimmen einer Änderung in dem Untermodus basierend auf einem Parameter des Rückkopplungssignals.

5. Schweißstromversorgung (100) nach einem der vorhergehenden Ansprüche,
wobei die Multimodus-Leistungsausgabeschaltung (126, 128) einen Schaltregler aufweist, um eine Leistungsausgabe von der Schweißstromquelle (102) in eine Schweißleistung umzuwandeln.

6. Schweißstromversorgung (100) nach einem der vorhergehenden Ansprüche,
aufweisend mindestens einen Schalter, der mit der Steuerung (104) verbunden ist, um einen der Modi und einen Leistungsausgabepegel der Schweißstromversorgung (100) auszuwählen.

7. Schweißstromversorgung (100) nach einem der vorhergehenden Ansprüche,
aufweisend eine Benutzerschnittstelle, die eine Liste von Optionen für den Betrieb der Stromversorgung (100) bereitstellt, wobei die Liste einen Modus und einen Leistungsausgabepegel der Schweißstromversorgung (100) umfasst.

8. Schweißstromversorgung (100) nach einem der vorhergehenden Ansprüche,
wobei die Schweißstromquelle (102) zumindest eines ist von Netzstrom, einem motorbetriebenem elektrischen Generator oder einer Energiespeichervorrichtung, ferner aufweisend einen Bus, der mit der Schweißstromquelle (102), der Energiespeichervorrichtung und der Multimodus-Leistungsausgabeschaltung (126, 128) verbunden ist.

9. Schweißstromversorgung (100) nach einem der vorhergehenden Ansprüche,
wobei die Schweißstromquelle (102) einen Schweißbrenner mit Schweißstrom versorgen kann.

10. Schweißstromversorgung (100) nach Anspruch 1,
wobei die Steuerung (104) ferner eingerichtet ist zum:
- Steuern der ersten Multimodus-Leistungsausgabeschaltung (126) basierend auf einer ersten Strom-Spannungs-Kennlinie; und
- Steuern der zweiten Multimodus-Leistungsausgabeschaltung (128) basierend auf einer zweiten Strom-Spannungs-Kennlinie; oder
die Steuerung (104) ferner eingerichtet ist, sowohl die erste als auch die zweite Multimodus-Leistungsausgabeschaltung (126, 128) basierend auf einer ersten Strom-Spannungs-Kennlinie in dem Schweißmodus zu steuern; oder
die Steuerung (104) ferner eingerichtet ist, sowohl die erste als auch die zweite Multimodus-Leistungsausgabeschaltung (126, 128) basierend auf einer zweiten Strom-Spannungs-Kennlinie in einem Batterielademodus zu steuern.

11. Schweißstromversorgung (100) nach Anspruch 1 oder 10, ferner aufweisend eine dritte Multimodus-Leistungsausgabeschaltung (160) umfasst, die mit der Schweißstromquelle (102) verbunden und mit der Steuerung (104) verbunden ist, wobei die Steuerung (104) eingerichtet ist zum:
- Identifizieren, ob eine dritte Last (166) an der ersten Multimodus-Leistungsausgabeschaltung (156) einem Schweißmodus oder einem Batteriemodus entspricht; und
- Steuern der dritten Mehrmodus-Leistungsausgabeschaltung (160), um die Leistung von der Schweißstromquelle (102) basierend auf dem identifizierten von dem Schweißmodus oder dem Batteriemodus zu konditionieren.

12. Verfahren zum Betreiben einer Schweißstromversorgung (100) nach einem der Ansprüche 1 bis 11, aufweisend:
- Übertragen eines Testsignals an jede Multimodus-Leistungsausgabe und Bestimmen, ob eine Last angeschlossen ist;
- Identifizieren, ob eine Last (130, 162, 132, 164, 166) an einer Multimodus-Leistungsausgabeschaltung (126, 156, 128, 158, 160) einem Schweißmodus oder einem Batteriemodus entspricht; und
- Konditionieren der Leistung von einer Schweißstromquelle (102) basierend auf jeweiligen Strom-Spannungs-Kennlinien in dem identifizierten von dem Schweißmodus oder dem Batterielademodus.

13. Verfahren zum Betreiben einer Schweißstromversorgung (100) nach Anspruch 12, ferner aufweisend:
- Steuern der Multimodus-Leistungsausgabeschaltung (126, 156, 128, 158, 160) basierend auf einer ersten Strom-Spannungs-Kennlinie in dem Schweißmodus; und
- Steuern der Multimodus-Leistungsausgabeschaltung (126, 156, 128, 158, 160) basierend auf einer zweiten Strom-Spannungs-Kennlinie in dem Batterielademodus, wobei die erste Strom-Spannungs-Kennlinie von der zweiten Strom-Spannungs-Kennlinie verschieden ist.

## Revendications

1. Alimentation électrique de type soudage (100), comprenant :
- une source d'alimentation de type soudage (102) connectée à un circuit de sortie d'alimentation multimode (106) ; **caractérisée en ce que** l'alimentation électrique de type soudage (100) comprend en outre :
- un contrôleur (104) pour recevoir une entrée de la source d'alimentation de type soudage (102) et émettre un signal de commande vers le circuit de sortie d'alimentation multimode (106), le contrôleur (104) étant configuré pour :
- identifier si une charge à la sortie d'alimentation multimode correspond à un mode de soudage ou à un mode de charge de batterie ; et
- commander le circuit de sortie d'alimentation multimode (106) pour conditionner la puissance provenant de la source d'alimentation de type soudage (102) sur la base du mode de soudage identifié ou du mode de charge de batterie, dans lequel
l'alimentation électrique de type soudage (100) comprend en outre
- la source d'alimentation de type soudage (102) connectée à un premier circuit de sortie d'alimentation multimode (126) et à un second circuit de sortie d'alimentation multimode (128) ; et
- le contrôleur (104) ayant une entrée en communication électrique avec la source d'alimentation de type soudage (102) et chacun des premier et second circuits de sortie d'alimentation multimode (126, 128), le contrôleur (104) étant configuré pour :
- transmettre un signal de test à chaque sortie d'alimentation multimode et déterminer si une charge est connectée ;
- identifier si une première charge (130) au niveau du premier circuit de sortie d'alimentation multimode (126) correspond à un mode de soudage ou à un mode de batterie sur la base du signal de test ;
- identifier si une seconde charge (132) au niveau du second circuit de sortie d'alimentation multimode (128) correspond au mode de soudage ou au mode de batterie sur la base du signal de test ; et
- commander les premier et second circuits de sortie d'alimentation multimode (126, 128) pour conditionner l'alimentation provenant de la source d'alimentation de type soudage (102) sur la base de courbes courant-tension respectives dans le mode de soudage ou le mode de batterie identifié,
dans laquelle la première charge (130) correspond au mode de soudage et la seconde charge (132) correspond au mode de charge de batterie.

2. Alimentation électrique de type soudage (100) selon la revendication 1,
dans laquelle le contrôleur (104) est en outre configuré lors de la transmission d'un signal de test à la charge (130, 132) dans le mode de charge de batterie pour :
- surveiller un signal de rétroaction en réponse au signal de test ; et
- déterminer un sous-mode sur la base d'un paramètre du signal de rétroaction,
dans laquelle le signal de rétroaction comprend un paramètre de batterie comprenant l'un parmi la température, la résistance, le courant et la tension.

3. Alimentation électrique de type soudage (100) selon la revendication 2,
le contrôleur (104) étant configuré en outre pour commander le circuit de sortie d'alimentation multimode (126, 128) dans le mode de charge de batterie sur la base du sous-mode déterminé, le sous-mode comprenant l'un parmi un mode de charge normal, un mode de charge lente, un mode de charge rapide ou un mode de courant élevé.

4. Alimentation électrique de type soudage (100) selon la revendication 2 ou 3, dans laquelle le contrôleur (104) est configuré en outre pour :
- fournir une alimentation par batterie à la charge (130, 132) sur la base du sous-mode déterminé ;
- transmettre périodiquement le signal de test à la charge dans le sous-mode déterminé ;
- surveiller le signal de rétroaction en réponse au signal de test ; et
- déterminer un changement dans le sous-mode sur la base d'un paramètre du signal de rétroaction.

5. Alimentation électrique de type soudage (100) selon l'une quelconque des revendications précédentes,
dans laquelle le circuit de sortie d'alimentation multimode (126, 128) comprend un régulateur de commutation pour convertir une sortie d'alimentation de la source d'alimentation de type soudage (102) en une alimentation de type soudage.

6. Alimentation électrique de type soudage (100) selon l'une quelconque des revendications précédentes,
comprenant au moins un commutateur connecté au contrôleur (104) pour sélectionner l'un des modes et un niveau de sortie d'alimentation de l'alimentation électrique de type soudage (100).

7. Alimentation électrique de type soudage (100) selon l'une quelconque des revendications précédentes,
comprenant une interface utilisateur fournissant une liste d'options pour le fonctionnement de l'alimentation électrique (100), la liste comprenant un mode et un niveau de sortie d'alimentation de l'alimentation électrique de type soudage (100).

8. Alimentation électrique de type soudage (100) selon l'une quelconque des revendications précédentes,
dans laquelle la source d'alimentation de type soudage (102) est au moins l'une d'une alimentation secteur, d'un générateur électrique entraîné par moteur, ou d'un dispositif de stockage d'énergie, comprenant en outre un bus connecté à la source d'alimentation de type soudage (102), le dispositif de stockage d'énergie, et le circuit de sortie d'alimentation multimode (126, 128).

9. Alimentation électrique de type soudage (100) selon l'une quelconque des revendications précédentes,
dans laquelle la source d'alimentation de type soudage (102) peut fournir une alimentation de type soudage à une torche de type soudage.

10. Alimentation électrique de type soudage (100) selon la revendication 1,
le contrôleur (104) configuré en outre pour :
- commander le premier circuit de sortie d'alimentation multimode (126) sur la base d'une première courbe courant-tension ; et
- commander le second circuit de sortie d'alimentation multimode (128) sur la base d'une seconde courbe courant-tension ; ou
le contrôleur (104) est en outre configuré pour commander à la fois les premier et second circuits de sortie d'alimentation multimode (126, 128) sur la base d'une première courbe courant-tension dans le mode de soudage ; ou
le contrôleur (104) est en outre configuré pour commander à la fois les premier et second circuits de sortie d'alimentation multimode (126, 128) sur la base d'une seconde courbe courant-tension dans un mode de charge de batterie.

11. Alimentation de puissance de type soudage (100) selon la revendication 1 ou 10, comprenant en outre un troisième circuit de sortie d'alimentation multimode (160) connecté à la source d'alimentation de type soudage (102) et connecté au contrôleur (104), le contrôleur (104) étant configuré pour :
- identifier si une troisième charge (166) au niveau du premier circuit de sortie d'alimentation multimode (156) correspond à un mode de soudage ou à un mode de batterie ; et
- commander le troisième circuit de sortie d'alimentation multimode (160) pour conditionner l'alimentation provenant de la source d'alimentation de type soudage (102) sur la base d'un parmi le mode de soudage ou le mode de batterie identifié.

12. Procédé de fonctionnement d'une alimentation électrique de type soudage (100) selon l'une des revendications 1 à 11, comprenant :
- la transmission d'un signal de test à chaque sortie d'alimentation multimode et la détermination si une charge est connectée ;
- l'identification du fait qu'une charge (130, 162, 132, 164, 166) au niveau d'un circuit de sortie d'alimentation multimode (126, 156, 128, 158, 160) correspond à un mode de soudage ou un mode de batterie ; et
- le conditionnement d'alimentation à partir d'une source d'alimentation de type soudage (102) sur la base de courbes courant-tension respectives dans l'un parmi le mode de soudage ou le mode de charge de batterie identifié.

13. Procédé de fonctionnement d'une alimentation électrique de type soudage (100) selon la revendication 12, comprenant en outre :
- la commande du circuit de sortie d'alimentation multimode (126, 156, 128, 158, 160) sur la base d'une première courbe courant-tension dans le mode de soudage ; et
- la commande du circuit de sortie d'alimentation multimode (126, 156, 128, 158, 160) sur la base d'une deuxième courbe courant-tension dans le mode de charge de batterie, la première courbe courant-tension étant différente de la deuxième courbe courant-tension.
